**Europäisches Patentamt**

**European Patent Office**

**Office européen des brevets**

(19)

(11) Veröffentlichungsnummer: **0 134 417**

**B1**

# (12) EUROPÄISCHE PATENTSCHRIFT

(45) Veröffentlichungstag der Patentschrift:
08.04.87

(21) Anmeldenummer: **84106246.6**

(22) Anmeldetag: **01.06.84**

(51) Int. Cl.⁴: **H 04 N 7/00**

(54) Übertragungssystem für TV-Signale in Richtfunkstrecken.

(30) Priorität: **20.08.83 DE 3330163**

(43) Veröffentlichungstag der Anmeldung:
**20.03.85 Patentblatt 85/12**

(45) Bekanntmachung des Hinweises auf die Patenterteilung:
**08.04.87 Patentblatt 87/15**

(84) Benannte Vertragsstaaten:
**DE FR GB IT**

(56) Entgegenhaltungen:
**DE-A-2 017 199**
**DE-B-1 160 000**
**DE-C-956 690**
**US-A-3 675 131**

**PROCEEDINGS OF THE IRE, Band 44, No. 12, Dezember 1956, New York, B. FISK and C.L. SPENCER "Synthesizer stabilized single-sideband systems", Seiten 1680-1685**
**NTZ, Heft 7, 1964, VDE-Verlag, Berlin, W.v.GUTTENBERG und E. KUGLER "Modulation von Fernsehsignalen für gemeinsame Übertragung von Fernsprechen und Fernsehen auf Kabeln", Seiten 325-331**
**PROCEEDINGS OF THE IRE, Band 44, No. 12, Dezember 1956, New York, J.P. COSTAS "Synchronuous communications", Seiten 1713-1718**
(73) Patentinhaber: **ANT Nachrichtentechnik GmbH, Gerberstrasse 33, D-7150 Backnang (DE)**

(72) Erfinder: **Weber, Herbert, Robert- Bosch- Strasse 1, D-7150 Backnang (DE)**
Erfinder: **Lier, Hans- Peter, Dipl.- Ing., Einsteinstrasse 12, D-7150 Backnang (DE)**

(74) Vertreter: **Wiechmann, Manfred, Dipl.- Ing., ANT Nachrichtentechnik GmbH Gerberstrasse 33, D-7150 Backnang (DE)**

## Beschreibung

Die Erfindung betrifft ein Übertragungssystem für TV-Signale nach dem Restseitenband Amplitudenmodulations-Verfahren in Richtfunkstrecken, wobei das Seitenbandsignal mit einer Filtermethode mit Hilfe eines Nyquistfilters erzeugt wird.

Nach der Fernsehnorm ist im Empfägner ein Nyquistfilter vor dem Demodulator vorgesehen. Da man bei Richtfunkstrecken nicht an diese Norm gebunden ist, wird hier der Weg für andere Entwicklungsmöglichkeiten frei.

Der Erfindung liegt die Aufgabe zugrunde, ein Übertragungssystem der eingangs genannten Art anzugeben, mit dem die Sendeleistung verringert wird, so daß sich der Abstand von Sättigungsleistung des Sendeverstärkers zur Kanalleistung vergrößert und dadurch die Übertragungsverzerrungen verringert werden.

Die Aufgabe wird gelöst wie im Anspruch 1 beschrieben. Die Unteransprüche geben vorteilhafte Weiterbildungen an. Im folgenden wird anhand von Figuren ein Ausführungsbeispiel näher erläutert.

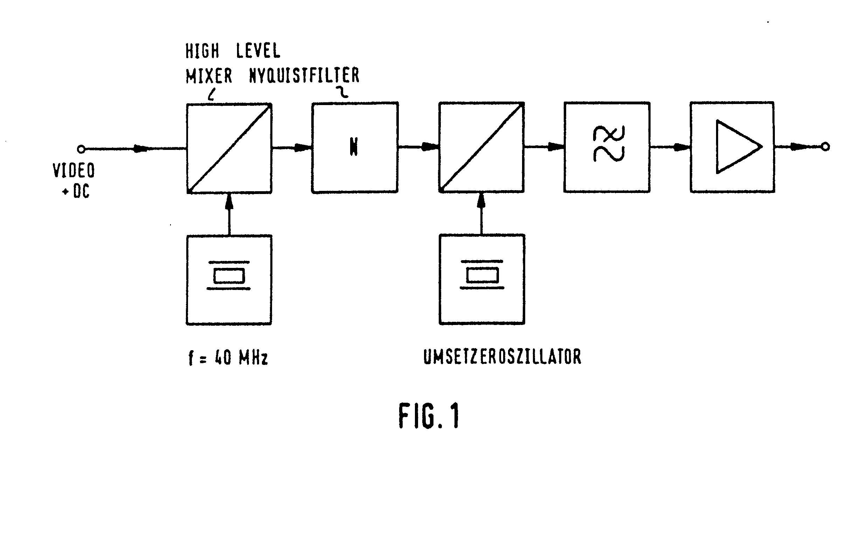

Dabei zeigt Figur 1 einen erfindungsgemäßen Einkanal-Basisbanddemodulator.

Figur 2 einen Frequenzplan des Basisbandmodulators von Fig. 1.

Figur 3 zeigt einen Quadraturempfänger für den Empfang eines Restseitenband Signals mit zusätzlich bis auf einen Testträger unterdrücktem Träger.

Figur 4 zeigt das Frequenzverhalten des Demodulators nach Figur 3.

Figur 5 zeigt einen Costas Loop Empfänger für den Empfang eines Restseitenband Signals mit völlig unterdrücktem Träger.

Bei der Entwicklung von Geräten zur Übertragung von Einseitenband- AM - TV Signalen über Richtfunkstrecken steht neben einer Reihe anderer Probleme die Entwicklung eines Modulalations- und Demodulationsverfahrens im Vordergrund, welches es gestattet, mit möglichst geringer Sendeleistung zu arbeiten. Bei einer Einseitenbandmodulation bedeutet dies eine möglichst große Trägerabsenkung mit dem Ziel, daß im Idealfall die Sendeleistung nur noch von der Seitenbandleistung bestimmt wird. Zu diesem Zweck werden zwei Verfahren beschrieben, die es gestatten, mit teilweiser oder völliger Trägerabsenkung zu arbeiten. Bei der Durchführung kommen Synchrondemodulatoren zum Einsatz, die entweder in der Lage sind, den vorhandenen abgesenkten Träger zu regenerieren oder den Träger aus der Korrelation der Seitenbandinformationen zu gewinnen.

Das Arbeitsprinzip des Modulators:

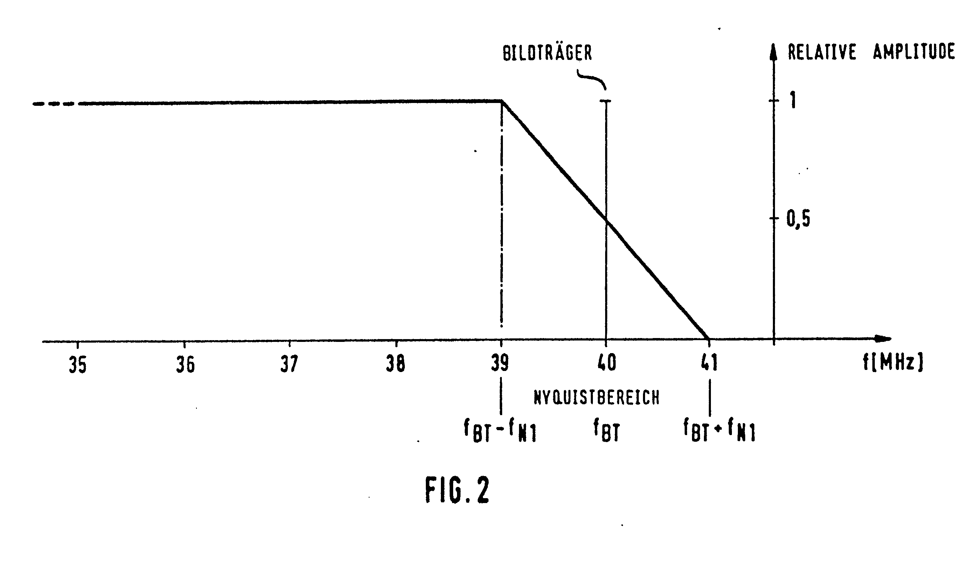

Aufgrund des Basisbandbereiches für das Videosignal ist es zweckmäßig, das Einseitenbandsignal mit einer Filtermethode zu erzeugen. Das Einseitenbandfilter des Modulators wird aufgrund der extrem niederfrequenten Signalinhalte als Filter mit einer Nyquistflanke ausgelegt, so daß die Selektionsanforderungen in Grenzen gehalten werden können. Figur 1 zeigt die Prinzipschaltung. Über einen Mischer erfolgt zunächst bei 40 MHz eine Zweiseitenband-Amplitudenmodulation, deren Trägerpegel über den Gleichspannungswert des Basisbandsignals eingestellt werden kann. Die verschiedenen ZF-Kanäle werden dann nach der Nyquistfilterung durch Kehrlageumsetzung gewonnen. Dies hat mehrere Vorteile: zum einen kann für alle Kanäle das gleiche Nyquistfilter verwendet werden, eine Umsetzung in VHF- und UHF-Bereiche ist durch Austausch der Umsetzeroszillatoren leicht möglich, und als Nyquistfilter kann ein Tiefpass verwendet werden, der das untere Seitenband (Kehrlage) ausfiltert, so daß nach dem Kehrlagemischprozeß dag Seitenband in Regellage erhalten wird. Die Nyquistflanke sollte wie in Figur 2 angedeutet, ausgelegt werden, der Nyquistbereich verläuft demnach im Abstand $\pm$ 1 MHz um die Trägerfrequenz herum. Dies gestattet eine ausreichende Seitenbandunterdrückung bei vertretbarem Filteraufwand.

Zur Synchrondemodulation ist eine Trägerregeneration erforderlich, die ihre Information entweder aus dem Träger selbst oder bei unterdrücktem Träger aus der Korrelation der Seitenbänder innerhalb des Nyquistbereiches erhält. Zur Lösung dieger Aufgabe werden im folgenden zwei Demodulationsverfahren basierend auf dem speziellen Modulationsverfahren mit Nyquistfilter im Sender beschrieben.

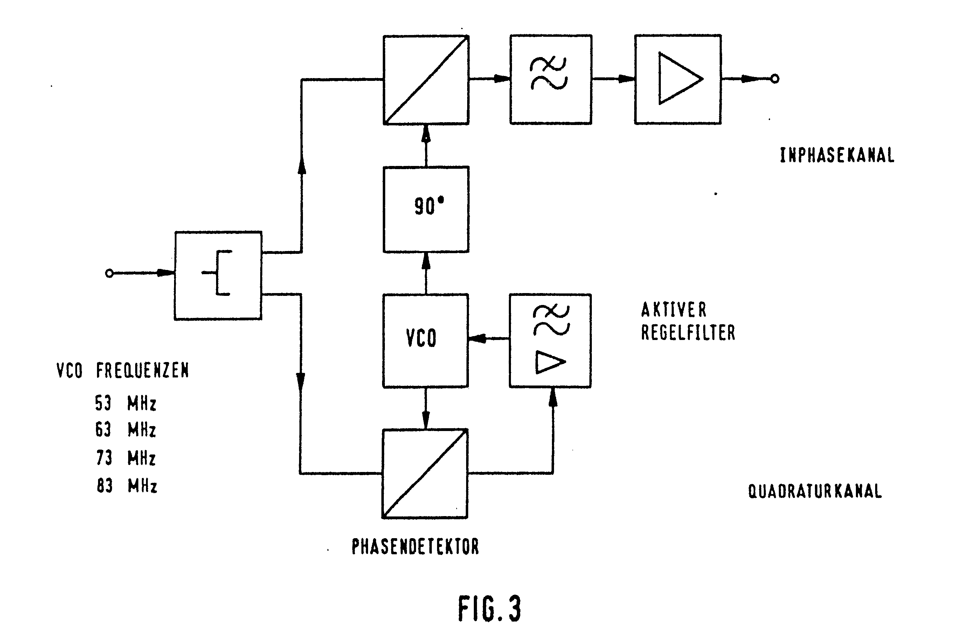

Synchrondemodulation mit Trägeranteil In Figur 3 ist die zur Demodulation von Zweiseitenband-AM Signalen mit Träger geeignete Schaltung dargestellt. Da die Amplitude des demodulierten Basisbandsignals bei Produktdemodulation dem Cosinus der Phasendifferenz zwischen Referenzträger und zugesetztem Träger proportional ist, der Träger aber in einer Phasenregelschleife mit einer inhärenten Phasenverschiebung von 90 ° erzeugt wird, ist im Demodulator ein Inphase- und Quadraturzweig erforderlich. Der Quadraturzweig sorgt dabei für die Trägerregeneration, der Inphasezweig fur die Demodulation. Die Dynamikeigenschaften der Phasenregelschleife werden durch die Eigenschaften des VCO, des Phasendetektors, des aktiven Regelfilters und durch den eingangsseitigen Signalpegel bestimmt. Die vorliegende Schaltung demoduliert ZSB-AM Signale mit Träger einwandfrei bis zu einem Modulationsgrad von 100 % (Träger-Seitenbandabstand 6 dB bei monochromatischer Modulation). Die gleiche Anordnung ist auch in der Lage, das nyquistgefilterte ZSB-Signal mit Träger einwandfrei zu demodulieren. Da ein Seitenband unterdrückt wird und die Trägeramplitude bei exakter Abstimmung um die Hälfte abgesenkt wird, beträgt die Leistungsreduktion bei harmonischer Modulation 33,3 % entsprechend - 4,7 dB bezogen auf das ZSB-Signal mit m = 100 %. Bei Modulation mit einem (nicht mittelwertfreien) Video-Signal sind die Verhältnisse erheblich komplizierter, und die Leistungsverhältnisse werden vom jeweiligen Signalinhalt abhängig.

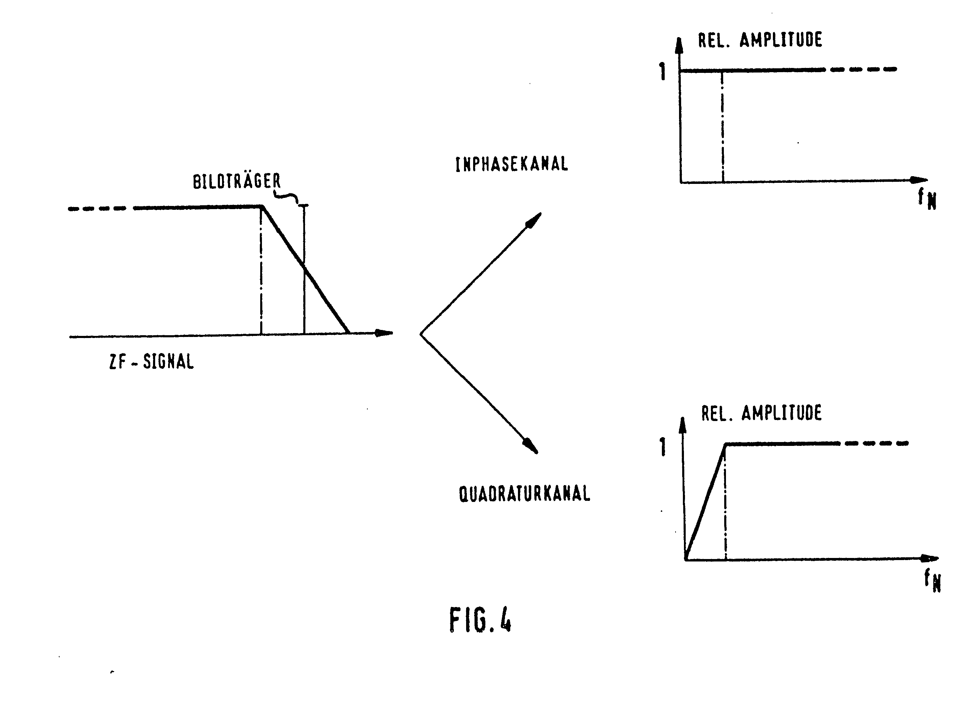

Das wichtigste Ergebnis des geschilderten Modulations- und modulationsverfahrens besteht jedoch darin, daß sich durch die Vorverzerrung durch das Nyquistfilter in Zusammenwirken mit der Quadraturdemodulation im Einseitenbandfall bessere Demodulationseigenschaften ergeben als bei einer herkömmlichen Einseitenbandmodulation mit einem hochgezüchteten Einseitenbandfilter und einem Synchrondemodulator ohne Quadraturzweig. Es hat sich gezeigt, daß zunächst im Inphasekanal die Nyquist-Vorverzerrung bei symmetrisch verlaufender Nyquistflanke aufgehoben wird und ein linearer Frequenzgang resultiert. Im Quadraturkanal hingegen erfolgt ein frequenzproportionales Ansteigen der Basisbandamplitude. Das heißt, daß niederfrequente Signalanteile nicht an den Modulationseingang des VCO, der ja nur den Träger regenerieren soll, gelangen können. Gegenüber dem herkömmlichen ESB-Synchrondemodulator entfällt daher die unerwünschte Frequenzmodulation des VCO, die zu erheblichen Verzerrungen führen kann. Die Einflüsse der verbesserten Demodulationseigenschaften auf die Leistungsreduktion bei monochromatischer Modulation und bei Modulation mit einem Videosignal sind beachtlich. Das in Figur 4 schematisch dargestellte Verhalten des Demodulators führt darüber hinaus zu einer Verbesserung der Signal-Rauschabstandsfunktion gegenüber dem herkömmlichen ESB Synchrondemodulator.

Synchrondemodulation ohne Trägeranteil

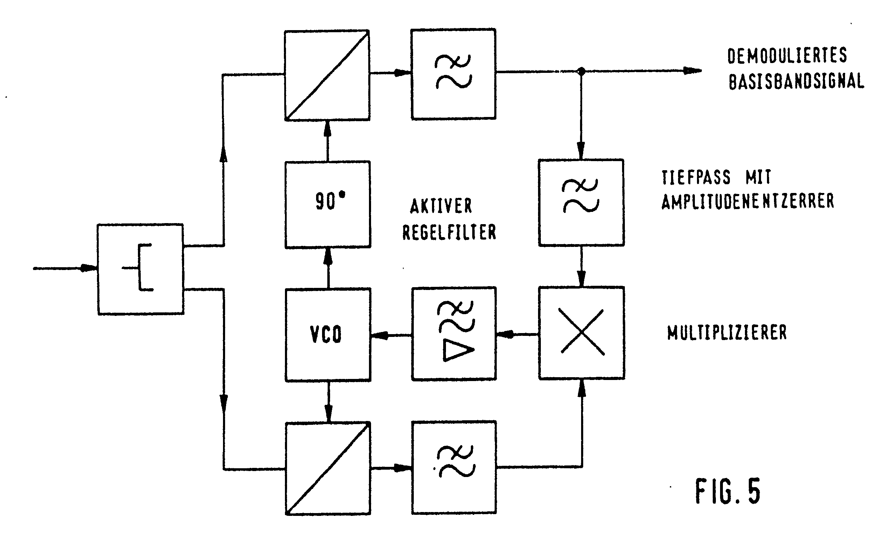

Für monochromatische Modulation sind Demodulationsschaltungen nach Figur 3 im Zweiseitenbandbereich bis zu Modulationsgraden von 100 % einsetzbar. Wird der Träger aus dem modulierten ZF-Signal gewonnen, treten bei Modulationsgraden über 100 % Nulldurchgänge der Hüllkurve auf, zwischen denen die Trägerphase 180 ° gedreht wird. Eine Regeneration des Trägers mit konstanter Phase ist dann nicht mehr möglich. Für Kabelfernsehanlagen wird in /3/ v. Guttenberg, W., Kügler, E. "Modulation von Fernsehsignalen für gemeinsame Übertragung von Fernsprechen und Fernsehen auf Kabeln", NTZ, 1964 Heft 7, s.325-331, ein Regenerationskonzept vorgeschlagen, welches auf dem speziellen Zeitverlauf des Videosignals basiert. Das Verfahren ist aber zur Übertragung mittelwertfreier Testsignale nicht geeignet. Weiterhin besteht die Möglichkeit, die Trägerphaseninformation über Pilotfrequenzen zu übertragen (z.B. UKW Stereo Rundfunk), eine Möglichkeit, die auch im vorliegenden Fall wegen der ohnehin vorhandenen Pilote genutzt werden könnte. Daneben exisitert aber auch die Möglichkeit, bei ZSB-Signalen mit unterdrücktem Träger bei beliebiger Basisbandinformation durch die in den Seitenbändern vorhandene Korrelation den Träger wiederzugewinnen. Die Schaltungsanordnung zeichnet sich durch eine besonders einfache Struktur aus (Figur 5) und wurde erstmals von P. Costas /4/ Costas, J.P., "Synchronous Communication", Proceedings of the IRE, Bd. 44, Nr. 12, Dez. 1956, s.17131718 vorgeschlagen. Der Korrelator besteht dabei aus einem Multiplizierer, der im Zweiseitenbandbereich des nyquistgefilterten Signals arbeitet und dessen Ausgangssignal dem aktiven Regelfilter zugeführt wird. Für eine optimale Arbeitsweise müssen Inphase- und Quadraturkanal gleiche Informaitonsinhalte aufweisen. Da dies durch die Nyquistfilterung nicht gegeben ist, wurde die Abweichung vom idealen ZSB-Verhalten berechnet und gezeigt, daß auch bei Vorverzerrung der Costas-Loop funktionsfähig bleibt. Nachteilig für das Regenerationsprinzip ist die Tatsache, daß sich der Phasenrand der Regelschleife um die Hälfte verringert. Demnach ist an die Modulationsbandbreite des VCO eine entsprechend höhere Anforderung zu stellen.

Einsatz von Pre- und Deemphase

Im Gegensatz zu Modulations- und Demodulationsverfahren mit Winkelmodulation ist bei AM- und speziell bei EM-Verfahren mit weißem Rauschspektrum am Ausgang des Demodulators eine Verbesserung des Signal-Rauschabstandes durch Pre- und Deemphase nicht möglich. Werden jedoch an den Signal-Rauschabstand geringere Ansprüche gestellt, so kann insbesondere bei der Übertragung von TV-Signalen die Preemphase zur Leistungsreduktion genutzt werden. Bei Modulation mit Videotestbildern ist aufgrund der Charakteristiken des Videosignals ein großer Teil der Sendeleistung in der Nähe des Trägers konzentriert. Bei Einsatz einer Preemphase können diese Anteile abgesenkt werden. Dies führt zu einer möglichen weiteren Absenkung der Sendeleistung.

## Patentansprüche

1. Übertragungssystem für TV-Signale nach dem Restseitenband Amplitudenmodulations-Verfahren in Richtfunkstrecken, wobei das Seitenbandsignal mit einer Filtermethode mit Hilfe eines Nyquistfilters erzeugt wird, dadurch gekennzeichnet, daß das Nyquistfilter im Modulator zwischen der Umsetzung der Video-Lage in die ZF-Lage einerseits und der ZF-Lage in die RF-Lage andererseits eingebaut ist, und daß im Demodulator anstelle des Nyquistfilters ein Filter mit rechteckiger Charakteristik eingebaut ist.

2. Übertragungssystem nach Anspruch 1, dadurch gekennzeichnet, daß im Sender der Träger zusätzlich bis auf einen Restträger unterdrückt wird und im Empfänger die Demodulation synchron erfolgt.

3. Übertragungssystem nach Anspruch 1, dadurch gekennzeichnet, daß im Sender der Träger völlig unterdrückt wird und im Empfänger der Träger durch Korrelation der Seitenbandinformationen im Bereich der Nyquistflanke zurückgewonnen wird.

4. Übertragungssystem nach Anspruch 1, 2 oder 3, dadurch gekennzeichnet, daß eine Preemphase verwendet wird, so daß der Signal Rauschabstand im Bereich des Farbträgers dem bei der Übertragung von FM-Funkstrecken entspricht.

**Claims**

1. Television signal transmission system operating according to the residual sideband amplitude modulation method on radio paths, with the sideband signals being generated by means of a filtering method employing a Nyquist filter, characterized in that the Nyquist filter is incorporated in the modulator between the conversion of the video position to the intermediate frequency position, on the one hand, and conversion of the intermediate frequency position to the radio frequency position, on the other hand, and that, instead of the Nyquist filter, a filter having a rectangular characteristic is incorporated in the demodulator.

2. Transmission system according to claim 1, characterized in that, in the transmitter, the carrier is additionally suppressed except for a residual carrier and, in the receiver, demodulation takes place in synchronism.

3. Transmission system according to claim 1, characterized in that, in the transmitter, the carrier is suppressed completely and, in the receiver, the carrier is recovered by correlation of the sideband information in the region of the Nyquist flank.

4. Transmission system according to claim 1, 2 or 3, characterized in that preemphasis is employed so that the signal to noise ratio in the region of the chrominance subcarrier corresponds to the signal to noise ratio for the transmission over FM radio paths.

**Revendications**

1. Système de transmission de signaux TV par faisceaux hertziens selon le procédé de modulation d'amplitude à bande latérale résiduelle, le signal à bande résiduelle étant produit par une méthode de filtrage à l'aide d'un filtre de Nyquist, ledit système étant caractérisé en ce que le filtre de Nyquist est incorporé au modulateur entre la conversion de la position vidéo en position FI d'une part et celle de la position FI en position RF d'autre part; et un filtre à caractéristique rectangulaire est incorporé à la place du filtre de Nyquist dans le démodulateur.

2. Système de transmission selon revendication 1, caractérisé en ce que la porteuse est en outre réduite à une porteuse résiduelle dans l'émetteur; et la démodulation est synchrone dans le récepteur.

3. Système de transmission selon revendication 1, caractérisé en ce que la porteuse est totalement supprimée dans l'émetteur; et la porteuse est récupérée dans le récepteur par corrélation des informations de bande latérale dans le domaine de la pente Nyquist.

4. Système de transmission selon une quelconque des revendications 1 à 3, caractérisé par l'emploi d'une préaccentuation, de sorte que le rapport signal/bruit au voisinage de la sous-porteuse couleur est égal à celui de la transmission par faisceaux hertziens FM.

HIGH LEVEL
MIXER  NYQUISTFILTER

VIDEO
+ DC

N

≋

f = 40 MHz

UMSETZEROSZILLATOR

FIG. 1

FIG. 2

INPHASEKANAL

QUADRATURKANAL

AKTIVER
REGELFILTER

90°

VCO

PHASENDETEKTOR

VCO FREQUENZEN

53 MHz
63 MHz
73 MHz
83 MHz

FIG.3

REL. AMPLITUDE

BILDTRÄGER

INPHASEKANAL

ZF - SIGNAL

QUADRATURKANAL

REL. AMPLITUDE

FIG. 4

FIG. 5

DEMODULIERTES BASISBANDSIGNAL

AKTIVER REGELFILTER

90°

VCO

TIEFPASS MIT AMPLITUDENENTZERRER

MULTIPLIZIERER

0 134 417